# EUROPEAN PATENT APPLICATION

(11) **EP 1 291 042 A1**
(43) Date of publication of application: **12.03.2003**
(21) Application number: 02256289.6
(22) Date of filing: 11.09.2002
(51) Int. Cl.: A63B 71/06

(54) **Determining position of players on a sport field**

(30) Priority: 11.09.2001 GB 0122004
(71) Applicant: Feldbau, Eitan, Ramat Gan 52526 (IL)
(72) Inventor: Feldbau, Eitan, Ramat Gan 52526 (IL)
(74) Representative: Silverman, Warren

(57) **Abstract**

A system for, and method of determining an offside position of a player on a football field, the system including: (a) at least one surveying instrument (10a, 10b) for surveying the field and capturing optical data, and (b) a computer (50) operatively connected so as to receive the optical data from the surveying instrument, the computer having digital analysis software, the computer designed and configured to transmit an output, the digital analysis software for: (i) determining, in real time, from the optical data, a position of a playing ball (70), and positions of players from an offensive team (2) and from a defensive team (1); (ii) identifying a forward ball-pass made by the offensive team (2); (iii) determining, in real time, the positions of the players from the offensive team (2) and from the defensive team (1), at a time that the forward ball-pass was performed, and (iv) determining whether at least one of the players (110) is in the offside position.

## Description

The present invention relates to the determination of the position of a ball and players on a sport field (also known as a pitch), and in particular, to a system for, and a method of, determining the exact position of a ball and players on a football field so as to assist the linesman in deciding whether a player is in an offside position.

It is known that determining the exact position of players on a sport field is very important in many sport-games in deciding whether the laws of the game have been infringed. In many cases, this determination is not simple. In football (also known as soccer), by way of example, linesman decision-making is difficult and is becoming increasingly complicated. In order to analyze and decide as to whether a player is in offside position, the linesman has to run and be in an imaginary vertical line with the defensive player being the closest (excepting the goalkeeper) to the goal line of the defensive player. Simultaneously, the linesman must verify that at the instant when the offensive player forwards the ball, no other offensive player is closer to the goal line than the above-mentioned closest defensive player.

The need to make simultaneous observations of two or more players, at times situated at a distance from one another, and consequently necessitating a very wide field of view, is even further complicated by an extremely dynamic game, such that it is often difficult to determine whether one of the offensive players is in an offside position. Consequently, linesmen often make erroneous decisions, which deleteriously and unjustly influence the outcome of a game.

Some solutions to the problem have been suggested by the prior art. GB Patent No. 2337385 to Lyden et al. teaches a player tracking system having a transmitter worn by all players and at fixed points within the sport field, which transmits the positions of the players to a computer. The computer analyzes the received data and transmits output information to game officials regarding the position of one or more players. Thus, game officials can make more accurate rulings, such as an offside ruling in a football game, or other potential infringements.

In GB Patent No. 2348757 to Chaudhry, the players are equipped with identification tags, which transmit signals to a tracking system. The tracking system then determines whether a player is in an offside position and informs the linesman of such by emitting a sound.

GB Patent No. 2339504 to Murray describes a tracking system based on a computer aid carried by the referee, which receives signals from location transmitters disposed on the players, inside the ball, and by the boundaries of the field. The computer calculates and decides, in real time, the exact position of the players and the ball, and sends a light, noise or vibration signal to the referee when an infringement of the laws of the game has occurred.

WO93/01867 to Gil et al. teaches a similar system of transmitters disposed on the player and the ball. Two or more receivers placed around the sport field allow a computer to determine, in real time, the position of the players and the ball.

All of the above prior art systems require transmitting devices to be disposed on the players, devices that may, incidentally, fall during the game and fail, or transmit erroneous data, when players collide, roll on the turf, or even perspire. The tremendous forces exerted on the ball may also make the disposition of a transmitter on the ball into a highly unreliable approach. Finally, it is costly, time-consuming and inconvenient to affix a large number of transmitters on the game players and on the balls.

Although various image-capturing systems for analyzing sport situations have been disclosed, e.g., FR2732797 to Billi, et al., and FR2726370 to Vallortigara, these systems do not deal with extremely complex determinations like offside determinations, in which multiple conditions occurring at a particular point in time must be identified. These include: determination of a forward pass, the pass destination (must be in the defensive half of the opponent), the relative location of an offensive player with respect to the rearmost defensive player other than the goalkeeper, and the position of the forward-most offensive player (i.e., in the opponent's defensive half of the field), all of which are determined for the exact time of the forward pass.

Moreover, the prior art does not even begin to contend with the intricacies of distinguishing between an active offside state and a passive offside state.

There is therefore a recognized need for, and it would be highly advantageous to have, a system for, and a method of, determining offside positions. It would be of further advantage for the system and method to be more reliable, convenient, and inexpensive than the systems and methods known heretofore. Finally, it would be of yet further advantage for the system and method to distinguish between an active offside state and a passive offside state.

The present invention is a system for, and a method of, determining the position of the ball and players on a sport field, and in particular to a system for, and a method of, determining the exact position of the ball and players on a football field. This information is of appreciable value to the linesman in determining whether a player is in an offside position.

According to one aspect of the present invention, there is provided a system for, and method of, determining an offside position of a player on a football field, the system including: (a) at least one surveying instrument for surveying the field and capturing optical data, and (b) a computer operatively connected so as to receive the optical data from the surveying instrument, the computer having digital analysis software, the computer designed and configured to transmit an output, the digital analysis software for: (i) determining, in real time, from the optical data, a position of a playing ball, and positions of players from an offensive team and from a defensive team; (ii) identifying a forward ball-pass made by the offensive team; (iii) determining, in real time, the positions of the players from the offensive team and from the defensive team, at a time that the forward ball-pass was performed, and (iv) determining whether at least one of the players is in the offside position.

According to one embodiment of the present invention, the surveying instrument is a video camera.

According to yet another embodiment of the present invention, the computer is designed and configured to transmit the output to a receiver.

According to yet another embodiment of the present invention, the receiver is a printer.

According to yet another embodiment of the present invention, the receiver is a monitor.

According to another embodiment of the present invention, the receiver is attached to a linesman.

According to another embodiment of the present invention, the receiver is a sound-producing device.

According to another embodiment of the present invention, the receiver is a vibration-producing device.

According to yet another embodiment of the present invention, the surveying instrument is disposed such that a combined field of view of all of the at least one surveying instrument covers substantially the entire field.

According to yet another embodiment of the present invention, the at least one surveying instrument is a single surveying instrument.

According to yet another embodiment of the present invention, the digital analysis software is further designed to monitor movement of the players based on the optical data.

According to yet another embodiment of the present invention, the digital analysis software is further designed to produce statistical data on the movement of each of the players.

According to one embodiment of the present invention, the method further includes the step of: producing an output based on the determining of the positions.

According to one embodiment of the present invention, the method further includes the step of: transmitting the output to a receiver.

According to yet another embodiment of the present invention, the method further includes the step of determining in real time whether the offside position is an active offside.

According to yet another embodiment of the present invention, the method further includes the step of determining in real time whether the offside position is a passive offside.

According to yet another embodiment of the present invention, the method further includes the step of determining whether the passive offside position turns into an active offside position.

For a better understanding of the present invention and to show how the same may be carried into effect, reference will now be made, by way of example, to the accompanying drawings, in which:-
FIG. 1 illustrates a football field and an inventive system for determining the positions of game players on the field.
FIG. 2 illustrates a football field wherein a player is in an active offside position, and
FIG. 3 illustrates a football field wherein a player is in a passive offside position, and
FIG. 4 is a logical-flow diagram illustrating how an active offside state is determined by the method of the present invention.

The present invention is a system for, and a method of, determining the position of the ball and players on a sport field, and in particular to a system for, and a method of, determining the exact position of the ball and players on a football field, thereby assisting the linesman in deciding whether a player is in an offside position.

The principles and operation of the system and method according to the present invention may be better understood with reference to the drawing and the accompanying description.

Before explaining at least one embodiment of the invention in detail, it is to be understood that the invention is not limited in its application to the details of construction and the arrangement of the components set forth in the following description or illustrated in the drawing. The invention is capable of other embodiments or of being practiced or carried out in various ways. Also, it is to be understood that the phraseology and terminology employed herein is for the purpose of description and should not be regarded as limiting.

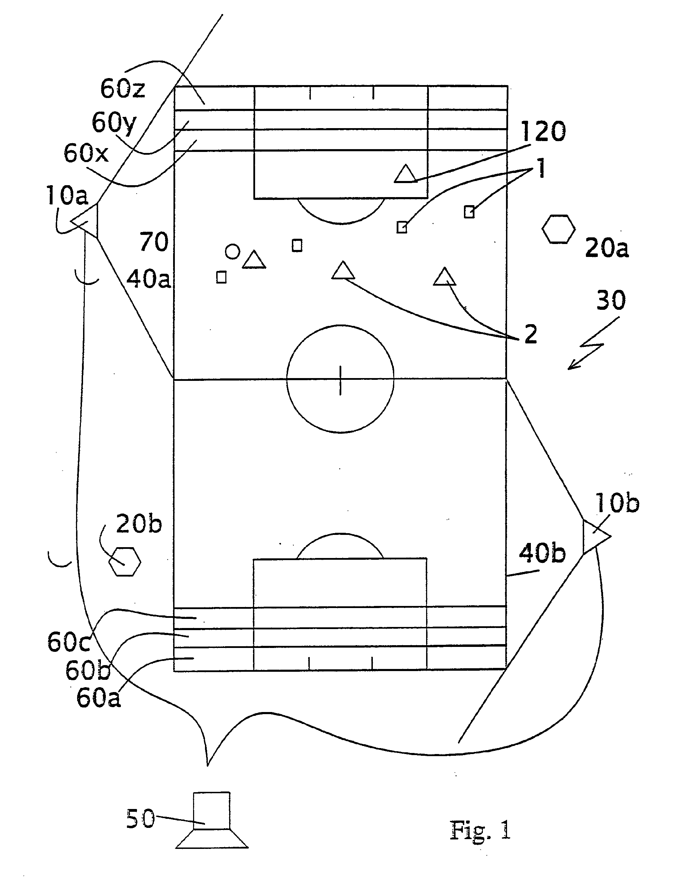

FIG. 1 illustrates a football field and an inventive system for determining the positions of game players and a ball on the field. At least one surveying instrument, and preferably at least two surveying instruments **10a** and **10b** (as shown in FIG. 1) are installed on a high pole outside the boundaries of a sport field **30,** such that each surveying instrument **10a** and **10b** is capable of surveying a suitable section of field **30.** When a single surveying instrument is used, the surveying instrument should be able to survey substantially the entire field **30,** and when two instruments **10a** and **10b** are installed, each surveying instrument should be capable of surveying at least one half **40a** and **40b** of field **30,** preferably more, so as to create an overlapping field of vision between instruments **10a** and **10b.** Surveying instruments **10a** and **10b** can be any of various instruments, known in the art, which are suitable for thoroughly scanning field **30.** Preferably, surveying instruments **10a** and **10b** are video cameras.

Surveying instruments **10a** and **10b** are connected to a computer **50,** which has digital analysis software for identifying objects, colors and shapes by algorithms known in the art. Consequently, computer **50** determines the real time position of the ball **70** and all the players of defensive team **1** and offensive team **2** (shown in FIG. 1 as triangles and squares, respectively) on field **30**. It should be emphasized that the system preferably identifies the two competing teams and their offensive direction by analyzing the main clothing color(s) of each team on field **30**, just before the kick-off of each half of the game or of an overtime period. Optionally, team colors can be manually input.

During the game, the system follows, in real time, the movements of ball **70** and players and analyzes them. In monitoring the game, the following issues are addressed by the system:
1) Determination of a forward pass.
   The system identifies a forward ball-pass, i.e., a pass towards the opposing goal. Under the current rule system, the ball-pass includes a kick or a header made by a member of the same team, but excludes a pass from the outer side of the side-line of field **30,** however, this rule may be subject to change. A backward ball-pass does not contribute to an offside state.
2) Pass Destination
   The system identifies the destination of the forward-passed ball. If the pass is delivered to, or inside, the opponents' half (i.e., the defensive half, either **40a** or **40b**) of field **30**, the system addresses the following issues:
3) Relative Location of Offensive Player(s) With Respect to Rearmost Defensive Player
   Along imaginary, parallel cross-sections of field **30 (60a, 60b, 60c,** and **60x, 60y, 60z** by way of example), the system checks if, at the time of the forward pass, a player of the offensive team is closer to the goal line than any defensive player except the goalkeeper (not shown).
4) Determining Position of Offensive Player(s)
   The system determines whether there was an (at least one) offensive player in the opponent's defensive half **40a** or **40b** of field **30** at the exact time of the pass.

In the absence of at least one of the four conditions described above, an offside state is not indicated.

As used herein in the specification and in the claims section that follows, the term "offensive team" refers to a team conducting an offensive, and in possession of the ball.

As used herein in the specification and in the claims section that follows, the term "defensive team" refers to the team opposing the offensive team. During the offensive of the offensive team, the defensive team tries to prevent the offensive team from scoring a goal.

As used herein in the specification and in the claims section that follows, the terms "regular player", "regular defensive player", and the like, refer to any player on the defensive team with the exception of the goalkeeper.

Whenever the system finds that the answer to these four questions is positive, the system determines that the offensive player closest to the goal line is in an offside position and is thereby potentially infringing the offside rule, and emits a signal. Thus, the system can determine whether offensive player **120** is in an offside position. The difference between active and passive offside positions is discussed herein below.

In the event that the system determines that an offside position has occurred, the relevant linesman **20a** or **20b** receives a signal, such as a sound or a vibration. Preferably, the signal is received by a small receiver worn on the wrist of the linesman, emitted by the system. Linesman **20a** or **20b** can raise a flag and signal the existence of an offside situation. Alternatively, linesman **20a** or **20b** can disregard the determination of the system and act according to personal judgment. This system can help the linesmen **20a** and **20b** in doubtful situations that occur in a very dynamic and changing game.

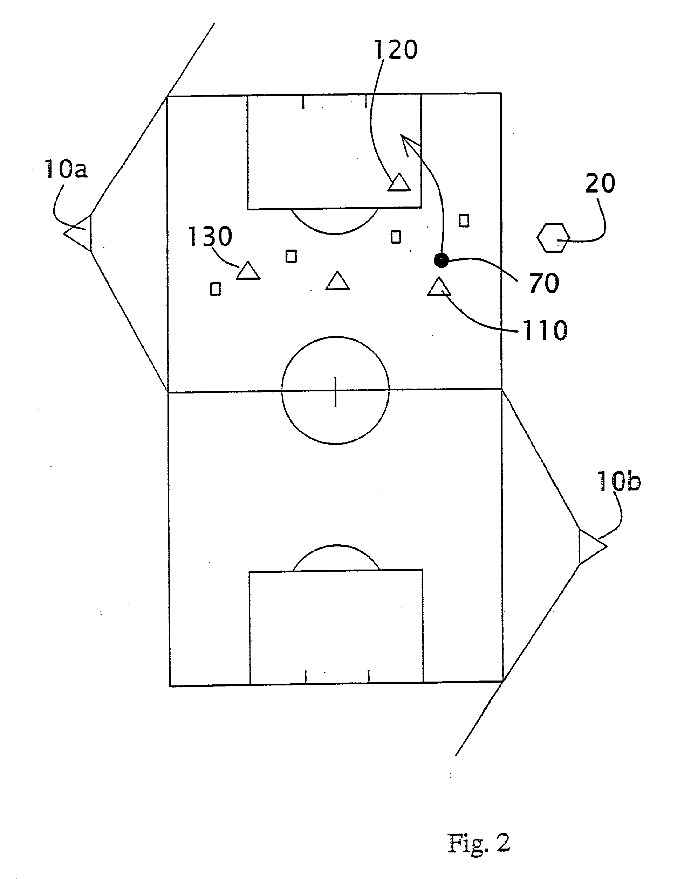

Football rules have evolved such that there currently exists a distinction between an active offside violation and a passive offside violation. FIG. 2 illustrates a football field wherein a player is in an active offside position. Offensive player **110** forwards ball **70** in the direction of offensive player **120.** Player **120** is closer to the goal line than any defensive player (excepting the goalkeeper, not shown), thus gaining an unfair and forbidden advantage that is considered to be an active offside position.

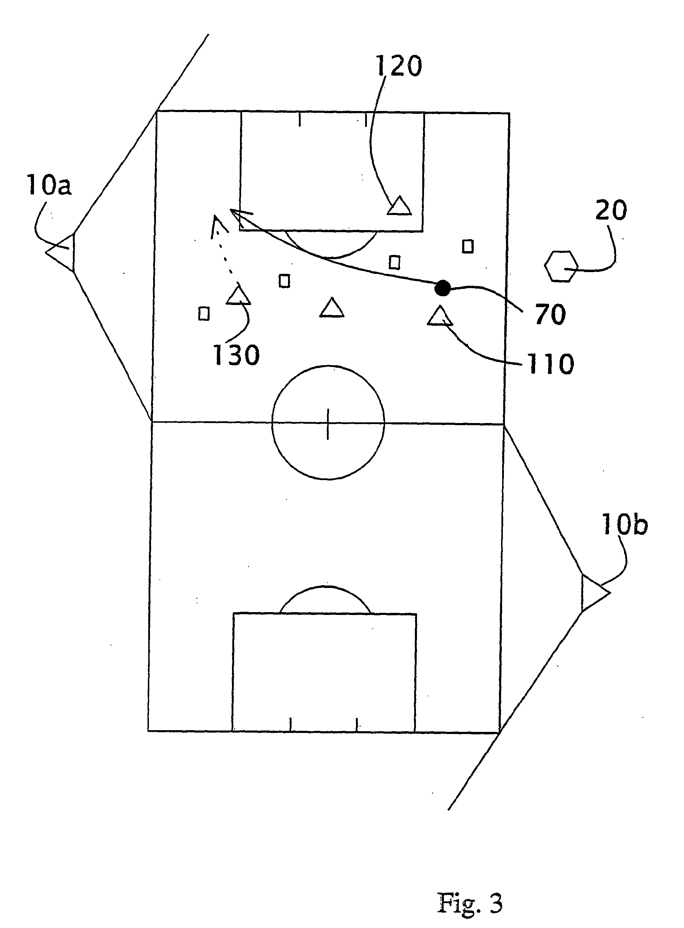

FIG. 3 illustrates a football field wherein a player is in a passive offside position. Offensive player **110** forwards ball **70** in the direction of offensive player **130**, who is not the closest player to the goal line at the time the ball **70** is passed. The fact that exactly at the same time, offensive player **120** is the closest player to the goal line (i.e., behind all defensive players excluding the goalkeeper) does not create any advantage to his team over the defensive team. Such a situation - a passive offside - is acceptable and is not considered to be an infringement of the laws of the game. Similarly, in the case of a direct kick or header in the direction of the goal by offensive player **110,** there exists a passive offside situation. Such a situation is complicated in the event that offensive player **120** is substantially positioned in a line between offensive player **110** and the goal of defensive team **1**. In this case, the system of the present invention distinguishes between a pass to offensive player **120** and a shot at the goal of defensive team **1** by, inter alia, determining and analyzing the velocity of ball **70** as a function of position. If, by way of example, the velocity of ball **70** is above a pre-determined value as it approaches offensive player **120**, the system determines that a shot has been attempted (i.e., a passive offside situation). If the velocity of ball **70** is below a (not necessarily identical) pre-determined value as it approaches offensive player **120**, the system determines that a pass has been attempted (i.e., a active offside situation). Optionally or additionally, other parameters can be used by the system to improve the accuracy of the determination, including the relative distances between the players and the goal, the angle of inclination of the ball **70** delivered by offensive player **110,** and the position at which ball **70** touches ground after being forwarded by offensive player **110.** Preferably, a combination of these parameters is used to improve the determination accuracy of the system.

It should be emphasized that as long as the attack is still in progress, or until a defensive player obtains possession of the ball, offensive player **120** is not allowed to actively participate in the attack, and no offensive player is allowed to forward ball **70** in his direction. If, for instance, offensive player **130** passes ball **70** in the direction of player **120**, player **120** is considered to be in an active offside position, even though at present, player **120** may not be closer to the goal line than at least one of the defensive players.

By determining the positions of the ball and the players on the field and the relative direction of the ball by analyzing the angle between the relevant offensive players, the distances between them and the ball velocity, the system assists linesmen **20a** and **20b** to decide as to whether players are in offside - active or passive - positions. The algorithm for assisting in the determination an offside violation is provided in greater detail hereinbelow.

After the system has determined that the offensive player (or players) closest to the goal line is in an offside position and is thereby potentially infringing the offside rule (see above), the system preferably determines whether the offside is an active offside state (offside violation) or a passive offside state (not an offside violation). An exemplary method of determining an active offside state or a passive offside state is presented in FIG. 4. If, after the forward pass was initiated, the offside player touches the ball (step 1), even inadvertently, an active offside is determined.

Even if the offside player does not touch the ball, an active offside situation may occur, as is illustrated schematically in steps 2a-2e. In the inventive method, the images are processed so as to determine whether the ball has been passed towards the offside player (step 2a). "Towards" may simply mean any forward pass, i.e., a pass towards the defensive goal line of the defensive team. Alternatively, "towards" is defined by at least one pre-determined parameter including the angle of the forwarded ball with respect to the offside player. The absolute distance between the forwarding player and the offside player may be included as an additional parameter.

Referring again to step 2a, if the ball has not been passed towards the offside player, the passive offside status is maintained. If, however, the ball has been forwarded towards the offside player, the images are processed, in conjunction with an internal clock, so as to determine the speed of the ball. If the speed of the ball is not below a pre-determined value (e.g., 30 km/h), it is evident that a pass has not been attempted; more likely, the ball has been shot at the goal, such that the position of the offside player does not contribute to the offensive effort at this point in the attack. Preferably, the speed of the ball is determined as it approaches the offside player.

Even if the speed of the ball is indeed below the pre-determined value, the forwarded ball may very well be a shot at the goal, and not a pass to the offside player. This possibility is particularly probable when the forwarding player shoots a "rainbow"-type shot with the intention of bouncing the ball over the head of a goalkeeper. In step 2c, the images are processed so as to determine the trajectory of the ball. If the trajectory is not above a pre-determined value, it appears that a pass has been attempted, and an active offside determination is made.

The trajectory parameter may include the trajectory at the time that the ball is initially forwarded, the trajectory of the ball as it approaches the offside player, and/or the height of the ball with respect to the offside player as the ball approaches or passes over the offside player.

Even if the trajectory is above the pre-determined value, the position of the offside player may contribute to the offensive effort. For example, a rainbow-type kick landing in the vicinity of the offside player may have a high trajectory and a low associated speed as it approaches the offside player. The location of the ball in the vicinity of the offside player yields an advantage to the offensive team, such that an active offside determination is warranted. Hence, in step 2d, the distance between the ball and the offside player is calculated. In the event that the distance has been significantly reduced, or reduced below a pre-determined value, an active offside determination is made. Various criteria, and combinations thereof, can be used to determine the above-mentioned reduction, e.g., a function including absolute distance of the ball from the offside player along with percent reduction of distance based on the initial distance at the time the ball was forwarded.

If the distance has not been significantly reduced (step 2d), the passive offside status is maintained. Optionally and preferably, the method identifies a deliberate passive movement of the offside player. As used herein in the specification and in the claims section that follows, the term "deliberate passive movement" refers to a movement, made by the offside player, in an effort to avoid contact with the ball, or to move away from the goal of the defending team. In such a case, even if the ball is forwarded in his direction at a relatively low speed and at a low trajectory, the deliberate passive movement of the offside player away from the ball and/or away from the goal (step 2e) indicates that the passive offside status is maintained. Similarly, if in step 2d, the distance between the ball and the offside player has been significantly reduced, the deliberate passive movement of the offside player away from the ball and/or away from the goal (step 2e) provides a strong indication that no advantage is being afforded the offensive team as a result of the position of the offside player. Hence, an offside violation would not be determined.

The system and method of the present invention preferably determine the end of an attack in which an offside position has been determined. This is of particular importance, because once an attack has ended, the passive offside status is nullified, and the offside player is free to participate in future attacks on the goal of the defending team.

The end of the offensive is identified by at least one of the following criteria:
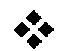 Goalkeeper or defender is in full possession of the ball;
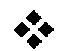 The ball goes out-of-bounds (including a corner-kick situation);
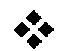 A foul has been determined by the game officials.

A ball going out-of-bounds can be readily identified by processing the playing-field images. Similarly, the identification of a foul can be identified by various methods. These include at least one of the following: identifying the handling of the ball by one of the officials, whose uniforms are recognized by the system; determining that the ball is stationary for at least 1-2 seconds, identifying when a regular player holds the ball with at least one hand, and identifying when a regular player places the ball on the playing field with at least one hand.

Determination of full possession of the ball by a defender is much less straightforward. In one embodiment of the present invention, possession is determined by comparing a pre-determined elapsed time with the time that the ball is in the vicinity of a defender after the ball has been contacted by the defender. This criterion accurately reflects situations in which the goalkeeper has caught the ball in his hands or with his legs, and subsequently proceeds to kick or throw the ball. The pre-determined elapsed time is preferably at least 1/10 of a second, but in some situations, a pre-determined elapsed time of up to 1-2 seconds may be preferable.

In another embodiment of the present invention, possession is determined when the ball touches a defender (including the goalkeeper), and subsequently, the ball touches the defender at least a second time, without a touch by an opposing player. Included in this criterion is a "touch, ground, touch" scenario that is typical of dribbling by a defender, in which the defender touches the ball, the ball touches the ground, and subsequently, the defender again contacts the ball.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

## Claims

1. A system for determining an offside position of a player on a football field, the system comprising:
(a) at least one surveying instrument for surveying the field and capturing optical data, and
(b) a computer operatively connected so as to receive said optical data from said surveying instrument, said computer having digital analysis software, said computer designed and configured to transmit an output,
said digital analysis software for:
(i) determining, in real time, from said optical data, a position of a playing ball, and positions of players from an offensive team and from a defensive team;
(ii) identifying a forward ball-pass made by said offensive team;
(iii) determining, in real time, said positions of said players from said offensive team and from said defensive team, at a time that said forward ball-pass was performed, and
(iv) determining whether the player is in the offside position.

2. The system of claim 1, wherein said determining of said positions includes:
determining whether, at said time of said forward ball-pass, a position of the player of said offensive team is closer than any regular defensive player to a defensive goal line of said defensive team.

3. The system of claim 1 or 2, wherein said determining of said positions includes:
determining whether, at said time of said forward ball-pass, at least one player of said offensive team is situated in a defensive half of the field of said defensive team.

4. The system of any preceding claim, wherein said digital analysis software is designed and configured for:
(v) determining, in real time, an end of an offensive of said offensive team, and
(vi) nullifying an offside status of the player in the offside position, such that the player is free to participate in future offensives.

5. The system of claim 4, wherein said determining of said end of said offensive includes determination of a full possession of said playing ball by at least one of said players of said defensive team.

6. The system of any preceding claim, wherein said digital analysis software is designed and configured for:
(v) determining, in real time, whether the offside position is an active offside.

7. The system of claim 6, wherein said determining whether the offside position is an active offside includes determining whether said ball has been passed towards the offside player.

8. The system of claim 7, wherein when said ball has been passed towards the offside player, said determining whether the offside position is an active offside includes determining whether, during said forward ball-pass, a trajectory of the ball is below a pre-determined value.

9. The system of claim 6, wherein said determining whether the offside position is an active offside includes calculating a distance between said ball and the offside player, at discrete intervals during an offensive, and if said distance is reduced with respect to a distance at said time of said forward ball-pass, determining an active offside.

10. The system of any one of claims 6 to 9, wherein said digital analysis software is further designed and configured for:
calculating a distance between said ball and the offside player, at discrete intervals during an offensive, so as to determine if said distance is reduced with respect to a distance at said time of said forward ball-pass, and
identifying whether a deliberate passive movement of the offside player has been performed,
wherein, if said deliberate passive movement of the offside player has been performed, the system maintains a passive offside status.

11. The system of any one of claims 6 to 10, wherein said digital analysis software is further designed and configured for:
identifying a deliberate passive movement of the offside player.

12. The system of any one of claims 6 to 11, wherein said determining whether the offside position is an active offside includes processing said optical data, and calculating, using time data, a speed of said playing ball.

13. The system of claim 12, wherein said speed is a substantially instantaneous speed of said playing ball as said ball approaches the offside player.

14. A method for determining an offside position of a player on a football field, the method comprising:
(a) providing a system including:
(i) at least one surveying instrument for surveying the field and capturing optical data, and
(ii) a computer operatively connected so as to receive said optical data from said surveying instrument, said computer having digital analysis software, said computer designed and configured to transmit an output,
(b) operating said system to produce a said output by a procedure in which said digital analysis software is utilized so as to:
(i) determine in real time, from said optical data, a position of a playing ball, and positions of players from an offensive team and from a defensive team;
(ii) identify a forward ball-pass made by said offensive team;
(iii) determine, in real time, said positions of said players from said offensive team and from said defensive team, at a time that said forward ball-pass was performed, and
(iv) determine whether the player is in the offside position.
